# EUROPEAN PATENT SPECIFICATION

(11) **EP 4 225 008 B1**
(45) Date of publication and mention of the grant of the patent: **08.07.2026**
(21) Application number: 21777593.1
(22) Date of filing: 24.09.2021
(51) Int. Cl.: A01B 69/00, A01B 76/00

(54) **AGRICULTURAL VEHICLE**
LANDWIRTSCHAFTLICHES FAHRZEUG
VÉHICULE AGRICOLE

(30) Priority: 05.10.2020 EP 20020459; 06.10.2020 NL 1043807
(43) Date of publication of application: 16.08.2023
(73) Proprietor: Lely Patent N.V., 3147 PB Maassluis (NL)
(72) Inventor: DE JONG, Ruth, 3147 PB Maassluis (NL); WISSE, Dik-Jan, 3147 PB Maassluis (NL); SIE, Howard, 3147 PB Maassluis (NL); VAN DEN BERG, Karel, 3147 PB Maassluis (NL)
(74) Representative: Octrooibureau Van der Lely N.V.
(86) International application number: PCT/IB2021/058725
(87) International publication number: WO 2022/074496

(56) References cited:
- EP-A1- 2 042 011
- CN-A- 111 645 478
- DE-A1- 102007 042 599
- DE-A1- 102016 107 676
- DE-A1- 2 328 133
- US-B1- 6 454 294
- US-B2- 9 655 343

## Description

The present invention concerns an agricultural vehicle as claimed in claim 1.

Modern agriculture uses a wide range of large and heavy machines for performing tasks on land. These heavy machines leave ruts in the ground, and because of their great weight cause the ground to slip towards ditch edges. In particular under wet conditions. The rear wheels of such an agricultural machine often run in the tracks of the front wheels, wherein extra ruts are formed. It is known to cause agricultural machines to run in crab-steer so that wheels do not run in the same track, such as in DE102007042599A1. Known examples of such machines are self-driving manure injectors, with a working unit on the rear for injecting farmyard manure into the ground. These machines usually have as standard axle steering, at least on the front wheels, in order to be able to turn corners in the standard fashion. By also providing axle steering on the rear wheel(s), both the front wheel(s) and the rear wheel(s) can be placed into a forced position for crab steering. Axle steering however means that the rotational axes of the wheels of a wheelset do not coincide in crab-steer position, and therefore friction is caused. This leads to extra wear on the wheels and damage to the ground surface.

It is the object of the invention to provide an agricultural vehicle which can be easily placed in a crab-steer position, and wherein, in the crab-steer position, the soil and ground surface are not damaged or are less damaged.

This is achieved with an agricultural vehicle with a working unit for performing an agricultural task, and with a chassis comprising a front wheelset which is rotatable with respect to the chassis about a first vertical rotational axis, and a rear wheelset which is rotatable with respect to the chassis about a second vertical rotational axis, wherein each wheelset comprises a rigid arm with a drivable wheel at both ends, a controller for independent control of the rotation speed of each wheel and configured for placing the agricultural vehicle in a normal position and in a crab-steer position by means of separate driving of the wheels, wherein in the normal position, the rotational axes of the wheels stand perpendicularly to the longitudinal axis of the chassis, and wherein in the crab-steer position, the rotational axes of the wheels stand at an angle to the longitudinal axis of the chassis.

By being able to control the speed of the wheels at both ends of the rigid arm individually, a rotation of the wheelset about the vertical rotational axis can be achieved, and the rigid arm can be placed in a specific position with respect to the chassis. By allowing both wheelsets thus to rotate about the corresponding vertical rotational axis, the entire agricultural vehicle can easily be placed in a crab-steer position. In this crab-steer position, the chassis stands at an angle to the forward movement direction. Because the wheelset comprises a rigid arm with a wheel on both sides, the rotational axes of the two wheels of the wheelset always coincide, so that both planes of rotation always stand in the forward movement direction and hence no friction is created by the oblique position of the wheels relative to the ground surface. This prevents damage to the soil and to the ground surface.

In a particular embodiment of the invention, at least one vertical rotational axis comprises an angle sensor for determining the angle between the rigid arm and the chassis. This has the advantage that the angle which the rigid arm of the wheelset makes can be used simply and directly as a control parameter in order to set the extent of the crab steering. Preferably, both wheelsets comprise an angle sensor, and the angle which the rigid arms of the two wheelsets make in the crab-steer position with the longitudinal axis of the chassis are equal but opposite to one another.

In a further particular embodiment of the invention, in the normal position and viewed in the direction of travel, the working unit is arranged on the chassis in front of the front wheelset or behind the rear wheelset. Thus in the crab-steer position, the working unit projects further sideways than in the normal position. Thus field edges can easily be worked without the need for a complex movement device for the working unit. A further advantage is that the center of gravity of the agricultural vehicle is shifted in the opposite direction. On working along a ditch edges and slopes, the soil is pressed less in the direction of the ditch or slope.

According to yet a further embodiment of the invention, the agricultural vehicle has a short side and a long side, wherein the working unit comprises a slide attached to the long side of the chassis and parallel to the longitudinal axis of the chassis. The slide can thus be attached in a compact fashion to the side edge of the agricultural vehicle. The sliding function acts in the crab-steer position when the entire chassis makes an angle with the forward movement direction. This construction is useful in particular when pushing feed in the direction of a feed fence.

In an advantageous embodiment according to the invention, the wheels are hydraulically drivable. Via a hydraulic drive, the wheels can be driven with steplessly adjustable rotation speed by controlling the pressure or volume flow of the oil. Hydraulic drives are often used in agricultural machines because of their robustness and reliability.

In a further advantageous embodiment of the invention, the wheels are electrically drivable. An electrically driven wheel can be designed compactly, for example integrated into the wheel hub. In addition, torque and rotation speed sensors can easily be integrated in the drive.

In a particular embodiment of an agricultural vehicle according to the invention, the working unit comprises a mowing unit or a fertilizing unit. In these types of working unit, it is important to be able to travel along the edges of the field and mow or fertilize the edges of the field well. This is easily possible by travelling in the crab-steer position.

In a further particular embodiment of an agricultural vehicle according to the invention, the agricultural vehicle comprises a slip sensor for emitting a slip value, and the controller is configured for placing the agricultural vehicle in a crab-steer position depending on the slip value. Slip causes damage to the ground surface and should be avoided as far as possible. By placing the machine in the crab-steer position, the front and rear wheels no longer run in the same track and thus give better traction, which prevents slip. The slip sensor can easily be configured in the form of a rotation speed sensor. The controller compares the measured rotation speed of a wheel with one or more rotation speeds of one or more other wheels. A high rotation speed indicates slip. The rotation speed and the associated vehicle speed can be compared with the vehicle speed which is measured in an alternative fashion, for example via (RTK) GPS.

It is furthermore particularly advantageous if the agricultural vehicle is autonomous. Both the steering, drive and placing in crab-steer position of the agricultural vehicle take place with the same means, i.e. simply by driving the wheels. This means that few components are required and makes the agricultural vehicle robust and reliable. This is particularly important for autonomous working.

The invention will be explained below with reference to the appended figures.
Figure 1 shows a schematic illustration in top view of an agricultural vehicle with axle steering according to the prior art;
Figure 2 shows a schematic illustration in top view of an agricultural vehicle according to the invention in a normal position and in a crab-steer position;
Figure 3 shows a schematic illustration in top view of an agricultural vehicle according to the invention of in the form of a feed dispensing trolley.

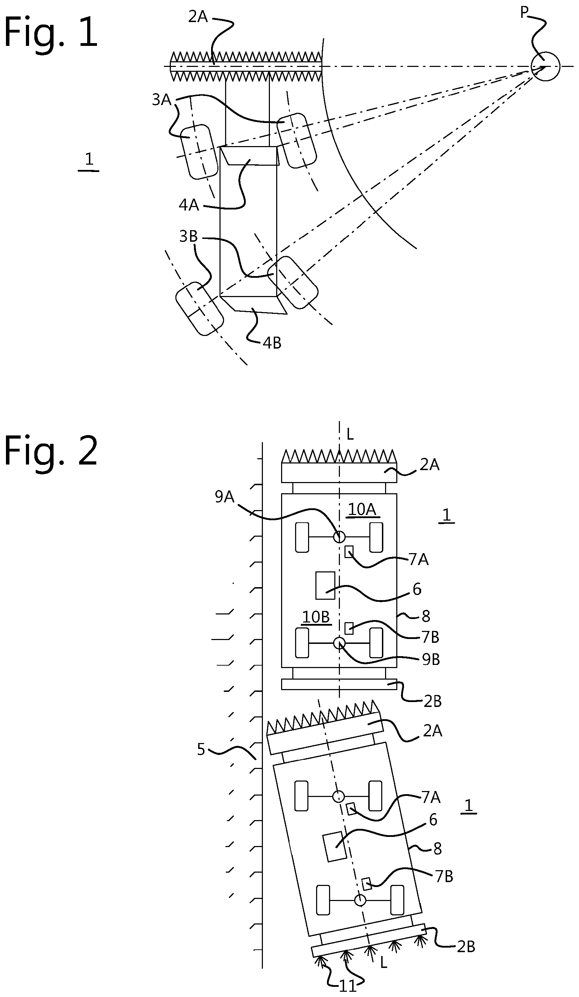

Figure 1 shows the agricultural vehicle 1 with a working unit 2A in the form of a mowing unit attached to the front side. This agricultural vehicle 1 steers by means of axle steering of all four wheels 3A, 3B. Figure 1 and the associated description do not form part of the invention but depict the prior art. All four wheels 3A, 3B can rotate about their own vertical axis such that, on steering around a corner, the separate virtual wheel axes coincide at one point (P). This leads to no friction on corners. The left and right wheels 3A, 3B of a wheelset are coupled via rod linkages 4A, 4B, so that the steering takes place equally and through the correct angle. It is evident that the wheel axes of both wheels of a wheelset do not precisely coincide. Such an agricultural vehicle 1 may be placed in a crab-steer position by turning the wheels 3B of the rear wheelset through the same but opposite angle to the wheels 3A of the front wheelset. Here too, the wheel axes of both wheels of a wheelset do not coincide.

Figure 2 shows a first embodiment according to the invention of an autonomous agricultural vehicle 1 with a working unit 2 for performing an agricultural task, and with a chassis 8 comprising a front wheelset 10A which is rotatable with respect to the chassis 8 about a first vertical rotational axis 9A, and a rear wheelset 10B which is rotatable with respect to the chassis 8 about a second vertical rotational axis 9B, wherein each wheelset 3A, 3B comprises a rigid arm with a drivable wheel at both ends, a controller 6 for independent control of the rotation speed of each wheel and configured for placing the agricultural vehicle 1 in a normal position and in a crab-steer position by means of separate driving of the wheels, wherein in the normal position, the rotational axes of the wheels stand perpendicularly to the longitudinal axis L of the chassis 8, and wherein in the crab-steer position, the rotational axes of the wheels stand at an angle to the longitudinal axis L of the chassis 8. The agricultural vehicle 1 is shown in both the crab-steer position (bottom) and in the normal position (top). Each vertical rotational axis 9A, 9B comprises an angle sensor 7A, 7B for determining the angle between the rigid arm of the wheelset 10A, 10B and the chassis 8. In the normal position and viewed in the direction of travel, a first working unit 2A, configured as a mowing unit, is arranged in front of the front wheelset 10A. A second working unit 2B, configured as a fertilizer unit, is arranged on the chassis 8 behind the rear wheelset 10B. The fertilizer unit comprises spreaders 11 for spreading liquid fertilizer from a container (not shown). All wheels are driven electrically via speed-regulated motors in the hub. The electrical power is supplied by a battery (not shown). However, hydraulically driven motors are possible, wherein the supply and/or pressure to the separate wheels is controlled electrically.

In the normal position (top), wherein the agricultural vehicle 1 moves forward in a straight line, all four wheels are driven with the same travel rotation speed regulated by the controller 6. On cornering, the wheels on the inside of the corner are actuated with a travel rotation speed minus a fixed steering rotation speed, while the outside wheels are actuated with a travel rotation speed plus the same fixed steering rotation speed. The amount of the steering rotation speed depends on the desired steering angle. The angle which the rigid arms make with the chassis 8 varies and is measured by the corresponding angle sensors 7A, 7B. They give a feedback signal to the controller, which on this basis decides to increase or reduce the steering rotation speed.

Placing the agricultural vehicle 1 in the crab-steer position is achieved by driving the wheels of the rear wheelset 10B at unequal speeds, whereby the chassis 8 of the agricultural vehicle 1 assumes a different position with respect to the travel direction. The angle which the rigid arms make with the chassis 8 is measured by the two angle sensors 7A, 7B, and when the desired angle is reached, the wheels of the rear wheelset 10B are actuated with the same rotation speed.

It can be seen in figure 2 that the agricultural vehicle 1 in the crab-steer position can mow with the mowing unit closer to the ditch 5 than the agricultural vehicle 1 in the normal position, with the same distance of the front wheel to the ditch edge. Also, the center of gravity of the agricultural vehicle in the crab-steer position is further away from the ditch 5, which is favorable for the risk of soil slipping into the ditch. The wheels of the rear wheelset 10B of the agricultural vehicle 1 in the crab-steer position no longer run in the tracks of the wheels of the front wheelset 10A, which causes less rutting.

The agricultural vehicle 1 has a slip sensor for providing a slip value, and the controller 6 is configured for placing the agricultural vehicle 1 in crab-steer position depending on the slip value. A rotation speed sensor is fitted in the electrically driven motors of the wheels. The slip sensor is formed by the controller 6 which compares the measured rotation speeds of the left wheel with the corresponding right wheel. The difference in rotation speeds is a measure of the slip value. In normal cases in which the agricultural vehicle moves forward in a straight line, the slip value is zero when there is no slip. If the slip value exceeds a specific limit value, the agricultural vehicle is put into the crab-steer position, wherein the front and rear wheels no longer run in the same track.

The autonomous agricultural vehicle 1 is navigated in the known fashion by GPS and odometry.

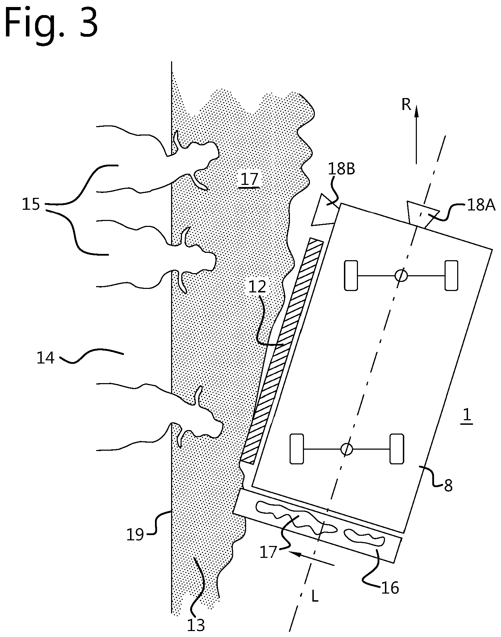

Figure 3 shows a second embodiment according to the invention of an agricultural vehicle 1 according to the invention, in which the agricultural vehicle 1 has a short side and a long side, and wherein the working unit comprises a slide 10 attached to the long side of the chassis and parallel to the longitudinal axis L of the chassis 8. The wheelsets and controller here are identical to those of the agricultural vehicle 1 described in figure 2. The agricultural vehicle 1 is configured as a feed trolley which dispenses feed in a shed from a container (not shown) into a feed trough 13 of an animal accommodation unit 14 with animals 15. A second working unit in the form of a dispensing belt is arranged on the rear of the agricultural vehicle 1 for transporting fresh feed 17 sideways from the container to the feed trough 13. The agricultural vehicle 1 can navigate autonomously through the shed. For this, it has a camera 18A on the front and a camera 18B on the side for travelling parallel to the feed fence. The feed trolley is shown in the crab-steer position. The oblique stance in the crab-steer position means that the front of the feed trolley does not travel over the feed 17 lying outside the feed trough 13. Travelling in the travel direction R parallel to the feed fence 19, the slide 12 pushes the feed 17 lying in front of the feed trough 13 in the direction of the feed fence 19, so that it is again accessible to the animals 15. Fresh feed 17 is dispensed by the conveyor belt 16 on top of the pushed feed 17. The oblique position of the agricultural vehicle 1 means that the conveyor belt 16 on one side protrudes over the feed 17 in the direction of the feed fence 18, whereby the fresh feed 17 falls on top of the old, just pushed feed 17. When the agricultural vehicle 1 is returned to the normal position on leaving the shed, the dispensing belt falls completely inside the outer periphery of the chassis 8, viewed in the longitudinal axis L of the chassis.

The invention is not restricted to an agricultural vehicle 1 with two wheelsets, but may also comprise extra wheelsets. The wheels of the extra wheelsets may be drivable or non-drivable, and may be identical or not identical to the front wheelset 10A or rear wheelset 10B respectively.

The invention is furthermore not restricted to the type of agricultural vehicles 1 described in the figures, but may also comprise any other type of agricultural vehicle. The agricultural vehicle 1 may be suitable for travelling on the land and for moving between animals in animal sheds. The surfaces in such animal sheds are often wet and slippery from manure, whereby here the problem of slip rapidly occurs.

## Claims

1. An agricultural vehicle (1) with a working unit (2A, 2B) for performing an agricultural task, and with a chassis (8) comprising a front wheelset (10A) which is rotatable with respect to the chassis (8) about a first vertical rotational axis (9A), and a rear wheelset (10B) which is rotatable with respect to the chassis (8) about a second vertical rotational axis (9B), wherein each wheelset (10A, 10B) comprises a rigid arm with a drivable wheel at both ends, the agricultural vehicle (1) being placeable in a normal position and in a crab-steer position, wherein in the normal position the rotational axes of the wheels stand perpendicularly to the longitudinal axis (L) of the chassis (8) and wherein in the crab-steer position, the rotational axes of the wheels stand at an angle to the longitudinal axis (L) of the chassis (8),
**characterized in that**
the agricultural vehicle has a controller (6) for independent control of the rotation speed of each wheel and configured for placing the agricultural vehicle (1) in the normal position and in the crab-steer position by means of separate driving of the wheels.

2. The agricultural vehicle (1) as claimed in claim 1, **characterized in that** at least one vertical rotational axis (9A, 9B) comprises an angle sensor (7A, 7B) for determining the angle between the rigid arm and the chassis (8).

3. The agricultural vehicle (1) as claimed in claim 1 or 2, **characterized in that** in the normal position and viewed in the direction of travel, the working unit (2A, 2B) is arranged on the chassis (8) in front of the front wheelset (10A) or behind the rear wheelset (10B).

4. The agricultural vehicle (1) as claimed in any of the preceding claims, **characterized in that** the agricultural vehicle (1) has a short side and a long side, and wherein the working unit (2A, 2B) comprises a slide (12) attached to the long side of the chassis (8) and parallel to the longitudinal axis (L) of the chassis (8).

5. The agricultural vehicle (1) as claimed in any of the preceding claims, **characterized in that** the wheels are hydraulically drivable.

6. The agricultural vehicle (1) as claimed in any of the preceding claims, **characterized in that** the wheels are electrically drivable.

7. The agricultural vehicle (1) as claimed in any of the preceding claims, **characterized in that** the working unit (2A, 2B) is a mowing unit or a fertilizing unit.

8. The agricultural vehicle (1) as claimed in any of the preceding claims, **characterized in that** the agricultural vehicle (1) comprises a slip sensor for emitting a slip value, and the controller (6) is configured for placing the agricultural vehicle (8) in a crab-steer position depending on the slip value.

9. The agricultural vehicle (1) as claimed in any of the preceding claims, **characterized in that** the agricultural vehicle (1) is autonomous.

## Patentansprüche

1. Landwirtschaftliches Fahrzeug (1) mit einer Arbeitseinheit (2A, 2B) zum Durchführen einer landwirtschaftlichen Aufgabe und mit einem Fahrgestell (8), das einen Vorderradsatz (10A), der in Bezug auf das Fahrgestell (8) um eine erste vertikale Drehachse (9A) drehbar ist, und einen Hinterradsatz (10B), der in Bezug auf das Fahrgestell (8) um eine zweite vertikale Drehachse (9B) drehbar ist, umfasst, wobei jeder Radsatz (10A, 10B) an beiden Enden einen starren Arm mit einem antreibbaren Rad umfasst, wobei das landwirtschaftliche Fahrzeug (1) in eine Normalposition und in eine Krebsganglenkposition versetzbar ist, wobei in der Normalposition die Drehachsen der Räder senkrecht zur Längsachse (L) des Fahrgestells (8) stehen und wobei in der Krebsganglenkposition die Drehachsen der Räder in einem Winkel zur Längsachse (L) des Fahrgestells (8) stehen,
**dadurch gekennzeichnet, dass**
das landwirtschaftliche Fahrzeug eine Steuerung (6) aufweist, die zur unabhängigen Steuerung der Drehzahl jedes Rades dient und dazu ausgelegt ist, das landwirtschaftliche Fahrzeug (1) mittels eines separaten Antreibens der Räder in die Normalposition und in die Krebsganglenkposition zu versetzen.

2. Landwirtschaftliches Fahrzeug (1) nach Anspruch 1, **dadurch gekennzeichnet, dass** mindestens eine vertikale Drehachse (9A, 9B) einen Winkelsensor (7A, 7B) zum Bestimmen des Winkels zwischen dem starren Arm und dem Fahrgestell (8) umfasst.

3. Landwirtschaftliches Fahrzeug (1) nach Anspruch 1 oder 2, **dadurch gekennzeichnet, dass** die Arbeitseinheit (2A, 2B) in der Normalposition und in der Fahrtrichtung gesehen am Fahrgestell (8) vor dem Vorderradsatz (10A) oder hinter dem Hinterradsatz (10B) angeordnet ist.

4. Landwirtschaftliches Fahrzeug (1) nach einem der vorhergehenden Ansprüche, **dadurch gekennzeichnet, dass** das landwirtschaftliche Fahrzeug (1) eine kurze Seite und eine lange Seite aufweist, und wobei die Arbeitseinheit (2A, 2B) einen Schlitten (12) umfasst, der an der langen Seite des Fahrgestells (8) und parallel zur Längsachse (L) des Fahrgestells (8) angebracht ist.

5. Landwirtschaftliches Fahrzeug (1) nach einem der vorhergehenden Ansprüche, **dadurch gekennzeichnet, dass** die Räder hydraulisch antreibbar sind.

6. Landwirtschaftliches Fahrzeug (1) nach einem der vorhergehenden Ansprüche, **dadurch gekennzeichnet, dass** die Räder elektrisch antreibbar sind.

7. Landwirtschaftliches Fahrzeug (1) nach einem der vorhergehenden Ansprüche, **dadurch gekennzeichnet, dass** die Arbeitseinheit (2A, 2B) eine Mäheinheit oder eine Düngeeinheit ist.

8. Landwirtschaftliches Fahrzeug (1) nach einem der vorhergehenden Ansprüche, **dadurch gekennzeichnet, dass** das landwirtschaftliche Fahrzeug (1) einen Schlupfsensor zum Ausgeben eines Schlupfwerts umfasst und die Steuerung (6) dazu ausgelegt ist, das landwirtschaftliche Fahrzeug (8) in Abhängigkeit von dem Schlupfwert in eine Krebsganglenkposition zu versetzen.

9. Landwirtschaftliches Fahrzeug (1) nach einem der vorhergehenden Ansprüche, **dadurch gekennzeichnet, dass** das landwirtschaftliche Fahrzeug (1) autonom ist.

## Revendications

1. Véhicule agricole (1) équipé d'une unité de travail (2A, 2B) destinée à effectuer une tâche agricole, et d'un châssis (8) comprenant un train de roues avant (10A) qui peut tourner par rapport au châssis (8) autour d'un premier axe de rotation vertical (9A), et un train de roues arrière (10B) qui peut tourner par rapport au châssis (8) autour d'un second axe de rotation vertical (9B), dans lequel chaque train de roues (10A, 10B) comprend un bras rigide équipé d'une roue motrice à ses deux extrémités, le véhicule agricole (1) pouvant être placé dans une position normale et dans une position en crabe, dans lequel, dans la position normale, les axes de rotation des roues sont perpendiculaires à l'axe longitudinal (L) du châssis (8) et dans lequel, dans la position en crabe, les axes de rotation des roues forment un angle par rapport à l'axe longitudinal (L) du châssis (8),
**caractérisé en ce que**
le véhicule agricole présente un dispositif de commande (6) pour commander indépendamment la vitesse de rotation de chaque roue et configuré pour placer le véhicule agricole (1) dans la position normale et dans la position en crabe au moyen d'un entraînement séparé des roues.

2. Véhicule agricole (1) selon la revendication 1, **caractérisé en ce qu'**au moins un axe de rotation vertical (9A, 9B) comprend un capteur d'angle (7A, 7B) pour déterminer l'angle entre le bras rigide et le châssis (8).

3. Véhicule agricole (1) selon la revendication 1 ou 2, **caractérisé en ce que**, dans la position normale et lorsque l'on regarde dans le sens de déplacement, l'unité de travail (2A, 2B) est agencée sur le châssis (8) devant le train de roues avant (10A) ou derrière le train de roues arrière (10B).

4. Véhicule agricole (1) selon l'une quelconque des revendications précédentes, **caractérisé en ce que** le véhicule agricole (1) présente un petit côté et un grand côté, et dans lequel l'unité de travail (2A, 2B) comprend un élément coulissant (12) fixé au grand côté du châssis (8) et parallèle à l'axe longitudinal (L) du châssis (8).

5. Véhicule agricole (1) selon l'une quelconque des revendications précédentes, **caractérisé en ce que** les roues peuvent être entraînées hydrauliquement.

6. Véhicule agricole (1) selon l'une quelconque des revendications précédentes, **caractérisé en ce que** les roues peuvent être entraînées électriquement.

7. Véhicule agricole (1) selon l'une quelconque des revendications précédentes, **caractérisé en ce que** l'unité de travail (2A, 2B) est une unité de fauchage ou une unité de fertilisation.

8. Véhicule agricole (1) selon l'une quelconque des revendications précédentes, **caractérisé en ce que** le véhicule agricole (1) comprend un capteur de patinage destiné à émettre une valeur de patinage, et le dispositif de commande (6) est configuré pour placer le véhicule agricole (8) dans une position en crabe en fonction de la valeur de patinage.

9. Véhicule agricole (1) selon l'une quelconque des revendications précédentes, **caractérisé en ce que** le véhicule agricole (1) est autonome.
